# EUROPÄISCHE PATENTSCHRIFT

(11) **EP 1 598 266 B1**
(45) Veröffentlichungstag und Bekanntmachung des Hinweises auf die Patenterteilung: **04.10.2006**
(21) Anmeldenummer: 05010088.2
(22) Anmeldetag: 10.05.2005
(51) Int. Cl.: B63G 8/00, B63B 49/00

(54) **Verfahren zur Fahrtplanung eines Unterseebootes**
Process for trip planification of a submarine
Procédé pour la planification de la route d'un sous-marin

(30) Priorität: 21.05.2004 DE 102004024972
(43) Veröffentlichungstag der Anmeldung: 23.11.2005
(73) Patentinhaber: Howaldtswerke-Deutsche Werft GmbH, 24143 Kiel (DE)
(72) Erfinder: Iwers, Uwe-Jens, Dipl.-Ing., 23568 Lübeck (DE)
(74) Vertreter: Hemmer, Arnd

(56) Entgegenhaltungen:
- EP-A- 1 464 573
- US-A- 4 046 998
- US-A- 5 916 298
- PATENT ABSTRACTS OF JAPAN Bd. 007, Nr. 038 (P-176), 16. Februar 1983 (1983-02-16) & JP 57 190221 A (HITACHI SEISAKUSHO KK), 22. November 1982 (1982-11-22)

## Beschreibung

Die Erfindung betrifft ein Verfahren zur Fahrtplanung eines Unterseebootes. Das Dokument US 5 916 298 beschreibt ein Verfahren zur Fahrtplanung eines Fahrzeugs. Dieses Verfahren ist jedoch nicht für ein Unterseeboot geeignet.

Konventionell angetriebene U-Boote weisen durch Verbrennungsmotoren angetriebene Generatoren auf, welche elektrische Energie erzeugen, die in Batterien gespeichert wird. Darüber hinaus weisen diese Unterseeboote einen elektrischen Antrieb auf, welcher es mit Hilfe der in den Batterien gespeicherten elektrischen Energie ermöglicht, mit dem Unterseeboot außenluftunabhängig zu fahren. Da jedoch die Batteriekapazität begrenzt ist, ist es immer wieder erforderlich, die Batterien zwischenzeitig aufzuladen, wozu das Unterseeboot auftauchen muss oder über einen Schnorchel die zum Betrieb des Verbrennungsmotors erforderliche Außenluft ansaugen muss. In diesen Fahrzuständen kann das Unterseeboot leichter geortet werden als bei getauchter außenluftunabhängiger Fahrt. Aus diesem Grunde wird während einer Mission versucht, diese Fahrtzustände so kurz wie möglich zu halten oder in Fahrtabschnitte zu legen, in welchen aufgrund äußerer Gegebenheiten, beispielsweise der geographischen Situation, die Gefahr einer Entdeckung des Unterseebootes geringer ist.

Für die Planung der Ladezyklen der Batterie problematisch ist ferner das Verhalten der üblicherweise in Unterseebooten verwendeten BleiAkkumulatoren. Beim Laden dieser Akkumulatoren bzw. Batterien ergeben sich zwei Ladestufen. In der ersten Ladestufe wird versucht mit möglichst hohem Strom, d. h. in der Regel mit maximal verfügbarer Ladeleistung die Batterie so schnell wie möglich aufzuladen. Bei Bleibatterien setzt jedoch ab Erreichen einer bestimmten, säuretemperaturabhängigen Spannung eine unerwünschte bzw. im Unterseeboot unzulässige Gasung von H₂-Gas ein. Um diese Gasung zu vermeiden, darf diese Spannung nicht überschritten werden. Daher muss mit zunehmenden Kapazitätspegel in einer zweiten Ladestufe der Ladestrom und damit die Ladeleistung reduziert werden. Dabei würde der Ladestrom theoretisch erst nach unendlich langer Zeit asymptotisch gegen null gehen, wobei theoretisch 100% der Batteriekapazität erreicht werden. In der Praxis wird diese zweite Ladestufe daher bei einem endlich kleinen Ladestrom abgebrochen. Diese zweite Ladestufe führt zu einer Verlängerung der Ladezeit und somit der Zeit, in welcher das Unterseeboot aufgetaucht oder schnorchelnd fahren muss (schlechtere indiscretion rate IR = indiskreter Ladezeitanteil in Relation zur Endlade/Ladezyklus-Zeit).

Da die Säuredichte abhängig vom Kapazitätspegel und die Batteriespannung proportional zur Säuredichte ist, ist die Zeit der genannten zweiten Ladestufe unabhängig von dem Grad der vorangegangenen Entladung annähernd gleich. Das bedeutet, dass selbst bei kleinen Entlademengen immer eine ungünstige, lange zweite Ladestufe erforderlich ist, wodurch sich die Zeit, in welcher das Unterseeboot nicht vollständig geschützt ist (indiscretion rate IR), weiter verlängert.

Im praktischen Betrieb kann daher häufig die zweite Ladestufe nicht bis zum Ende gefahren werden, d. h. die Ladung muss bei nicht vollständiger Ladung der Batterie abgebrochen werden. Dadurch verändert sich jedoch bei erneuter Entladung der Batterie das Batterieverhalten. Die spezifische Belastung wird höher, so dass die maximale Kapazität nicht mehr vollständig ausgeschöpft werden kann. Ferner setzt bei der dann anschließenden Ladung die Gasung bereits sehr viel eher, d. h. bei niedrigerem Kapazitätspegel ein, so dass sich die ungünstige zweite Ladestufe weiter verlängert. Dieses verschlimmert sich mit jedem nicht vollständigen Entlade/Lade-Zyklus. Ferner kann bei nicht ausreichender Batteriekapazität mit dem Unterseeboot keine Maximalgeschwindigkeit mehr gefahren werden, in der Regel, wenn der Batteriekapazitätspegel bei Langzeitentladung unter etwa 45% entladen wurde. Aus taktischen Gründen sollte ein solcher Zustand nie eintreten.

Aufgrund des vorangehend geschilderten problematischen Ladeverhaltens der Batterien eines Unterseebootes und des möglichst zu vermeidenden außenluftabhängigen Betriebs eines konventionellen Unterseebootes ist die Fahrtplanung und Vorausplanung der erforderlichen Lade- und Entladezyklen der Batterie äußert komplex und schwierig.

Es ist daher Aufgabe der Erfindung, ein Verfahren zur Fahrtplanung eines Unterseebootes bereitzustellen, welches die Vorausplanung der Lade- und Entladezyklen und insbesondere eine Verkürzung der ungünstigen Ladezustände ermöglicht.

Diese Aufgabe wird durch ein Verfahren mit den im Anspruch 1 angegebenen Merkmalen gelöst. Bevorzugte Ausführungsformen des Verfahrens ergeben sich aus den Unteransprüchen.

Das erfindungsgemäße Verfahren ist dafür vorgesehen, in einem Computersystem ausgeführt zu werden. Dazu ist das Verfahren vorzugsweise in einem Computerprogramm umgesetzt, bei dessen Ausführung das Verfahren auf einer entsprechenden Rechenanlage, vorzugsweise auf einem Standard-PC ablaufen kann. Ein solches Programm mit dem erfindungsgemäßen Verfahren kann dabei beispielsweise in auf einem Unterseeboot vorhandene Computersysteme, beispielsweise Navigationsrechner und Steuerrechner für den Betrieb des Unterseebootes, integriert werden. Das erfindungsgemäße Verfahren und insbesondere Computersysteme, welche dieses Verfahren umsetzen, können jedoch auch außerhalb des Unterseebootes, beispielsweise in einer Operationszentrale eingesetzt werden, um dort die Fahrten von Unterseebooten zu planen oder auch mögliche Bewegungen feindlicher Unterseeboote vorausbestimmen zu können. Weiterhin kann das Programm zu Simulationszwecken bei der Ausbildung an Land eingesetzt werden.

Das erfindungsgemäße Verfahren zur Fahrtplanung ist vorgesehen für Unterseeboote, welche zumindest einen elektrischen Antrieb mit einer Batterie zur Energieversorgung und eine Ladeeinrichtung für die Batterie aufweisen. Eine solche Ladeeinrichtung ist bei konventionellen Unterseebooten beispielsweise ein Dieselmotor, welcher einen Generator zur Stromerzeugung antreibt. Zusätzlich kann in einem solchen Unterseeboot auch eine außenluftunabhängige Energieversorgung (air independent propulsion system, kurz AIP-System), insbesondere eine Brennstoffzellenanlage vorgesehen sein, welche den elektrischen Antrieb sowie die übrigen elektrischen Verbraucher des Unterseebootes mit Energie versorgt und ggf. auch dazu verwendet werden kann, die Batterien aufzulagen. Weitere mögliche außenluftunabhängige Antriebssysteme sind z. B. Kreislaufdiesel, Stirling- oder MESMA-Antrieb.

Das erfindungsgemäße Verfahren läuft derart ab, dass zunächst ein zukünftiger Zeitpunkt ausgewählt wird, für welchen ein verbleibender verfügbarer Energievorrat, d. h. die verbleibende Restkapazität der Batterie bis zu einer vorgewählten Entladungsgrenze, vorausbestimmt wird. Erfindungsgemäß erfolgt die Vorausbestimmung des verbleibenden Energievorrates zu dem zukünftigen Zeitpunkt auf Grundlage der Fahrtdauer bis zu diesem Zeitpunkt, wobei für diese Fahrtdauer zumindest ein bestimmtes Verbrauchsprofil ausgewählt wird. Ein solches Verbrauchsprofil gibt den Energieverbrauch des Unterseebootes in einem bestimmten Fahrzustand an. Dabei wird zunächst der Energieverbrauch des Antriebs und auch der Energieverbrauch aller übrigen Verbraucher (Hotel-Load) erfasst. Der Energieverbrauch unterscheidet sich erheblich bei verschiedenen Fahrzuständen des Unterseebootes, insbesondere bei unterschiedlichen Geschwindigkeiten. Dabei können äußere Faktoren wie Strömung, Tauchtiefe, Abstand vom Grund sowie die in einem bestimmten Fahrzustand erforderlichen Anlagen und Systeme auf dem Unterseeboot und deren Energieverbrauch berücksichtigt werden. Derartige Verbrauchsprofile sind für verschiedene Fahrzustände des Unterseebootes in einer Speichereinheit des Rechnersystems gespeichert oder werden aktuell auf Grundlage bestimmter Ausgangswerte, insbesondere des Energieverbrauchs einzelner Verbraucher berechnet. Die Verbrauchsprofile können von der Werft vorgegeben sein, können aber auch in Referenzfahrten des Unterseebootes für die unterschiedlichen Fahrzustände bestimmt und abgespeichert werden. Aus den einzelnen Verbrauchsprofilen können durch Inter- oder Extrapolation auch Verbrauchsprofile für andere Fahrzustände ermittelt werden, für welche kein Verbrauchsprofil vorgespeichert wurde.

Neben der Fahrtdauer und den sich aus dem ausgewählten Verbrauchsprofil ergebenden Verbrauchswerten an elektrischer Energie wird erfindungsgemäß zur Bestimmung des verbleibenden Energievorrats auch Art und Dauer der bis zu diesem Zeitpunkt erfolgten Ladezyklen der Batterie berücksichtigt. D. h. es wird berücksichtigt, ob, wie oft und in welcher Ladestufe die Batterie bis zu dem ausgewählten zukünftigen Zeitpunkt geladen worden ist. Auf diese Weise können beispielsweise bei Bleiakkumulatoren Änderungen der Batteriekapazität und des Batterieverhaltens berücksichtigt werden, welche sich dadurch ergeben, dass in vorangehenden Ladezyklen die zweite Ladestufe überhaupt nicht oder nicht bis zu Ende gefahren wurde.

Diese genauere rechnerische Bestimmung der verbleibenden Restenergie in der Batterie bis zu einer vorbestimmten oder vorbestimmbaren Entladungsgrenze für einen beliebigen zukünftigen Zeitpunkt erlaubt eine genauere Fahrtplanung, da die erforderlichen Ladezyklen genau vorausbestimmt werden können und auf diese Weise möglichst kurz gehalten werden können.

Vorzugsweise wird ausgehend von einem Anfangsladezustand mit maximaler Batteriekapazität, d. h. mit einer maximalen Batteriekapazität bis zu einer bestimmten bzw. vorausbestimmten Entladungsgrenze, auf Grundlage einer geplanten Fahrtdauer mit zumindest einem ausgewählten Verbrauchsprofil ein erster Entladezyklus der Batterie simuliert bzw. berechnet und der verbleibende Energievorrat der Batterie am Ende dieses ersten Entladezyklus vorausbestimmt. Der Anfangsladezustand mit maximaler Batteriekapazität wird immer nach einem vollständigen Ladezyklus erreicht, in welchem bei Bleiakkumulatoren die oben beschriebene zweite Ladestufe mit reduziertem Ladestrom bis zum Ende gefahren wird, wobei, wie oben beschrieben, in der Praxis der Ladevorgang bei einem endlich kleinen Ladestrom abgebrochen wird. Ausgehend von dieser vollen Batteriekapazität kann dann auf Grundlage eines ausgewählten Verbrauchsprofils oder mehrerer ausgewählter Verbrauchsprofile, wenn sich der Fahrzustand während der gefundenen Fahrdauer ändert, der Entladevorgang der Batterie simuliert werden, so dass zu dem gewünschten Zeitpunkt der verbleibende Energievorrat der Batterie vorausbestimmt werden kann.

Auf Grundlage dieses verbleibenden Energievorrates kann dann in einem nächsten Schritt bestimmt werden, ob die Batterie wieder geladen werden muss und wie viel Zeit für den Ladevorgang erforderlich ist. Dabei kann insbesondere ermittelt werden, wie viel Zeit in der zweiten Ladestufe mit verringertem Ladestrom erforderlich ist, um die Batterie vollständig zu laden. Alternativ kann im zweiten Schritt ermittelt werden, wie weit mit der verbleibenden Restkapazität bis zu einer bestimmten Entladungsgrenze auf Grundlage eines bestimmten Verbrauchsprofils noch außenluftunabhängig gefahren werden kann. Bei der Simulation eines Entladezykluses der Batterie können neben den durch das Verbrauchsprofil vorgegebenen Verbrauchswerte weitere Einflussgrößen berücksichtigt werden, welche, wenn sie für bestimmte Fahrzustände typisch sind, ebenfalls in dem Verbrauchsprofil abgelegt bzw. gespeichert sein können. Derartige Einflussgrößen können insbesondere Einflussgrößen sein, welche das Batterieverhalten und insbesondere die Batteriekapazität beeinflussen, wie beispielsweise die aktuelle Säuretemperatur oder auch durch den Unterseeboottyp vorgegebene Größen wie Batterietyp, Batteriecharakteristik, Batteriegröße, Zellenzahl, Teilbatterien etc.

Weiter bevorzugt wird ausgehend von dem vorausbestimmten verbleibenden Energievorrat der Batterie am Ende eines Entladezyklus ein Ladezyklus unter Berücksichtigung einer ausgewählten Ladezeit und der zur Verfügung stehenden Leistung der Ladeeinrichtung simuliert bzw. berechnet und der verfügbare Energievorrat der Batterie am Ende dieses Ladezyklus vorausbestimmt. Zur Simulation des Ladezyklus werden insbesondere Einflussgrößen, welche durch den Unterseeboottyp vorgegeben sind, d. h. Batterietyp, Batteriegröße, Zellenzahl, maximal verfügbare Ladeleistung, etc. berücksichtigt. Zur Bestimmung der verfügbaren Ladeleistung wird auch der Fahrzustand während des Ladens, d. h. insbesondere die Fahrgeschwindigkeit berücksichtigt. So wird von der maximal verfügbaren Generatorleistung die erforderliche Antriebsleistung sowie erforderliche Hotel-Load zum Betrieb der Einrichtungen und Systeme des Unterseebootes abgezogen und auf diese Weise die maximal im jeweiligen Fahrzustand zur Verfügung stehende Ladeleistung ermittelt. Ferner wird bevorzugt basierend auf der Zahl, Art und Dauer der vorangehenden Ladezyklen berechnet, wie lange maximal in der günstigen ersten Ladestufe geladen werden kann und wie lange in der ungünstigeren zweiten Ladestufe geladen werden muss. Für den taktischen Betrieb des Unterseeboots wird praktischerweise zunächst die zur Verfügung stehende Ladezeit vorgegeben und dann auf deren Grundlage simuliert, bis zu welcher Kapazität in dieser Zeit mit Hilfe der zur Verfügung stehenden Ladeleistung die Batterie geladen werden kann. Alternativ kann das System jedoch auch vorausberechnen, welche Ladezeit erforderlich ist, um bei einem gegebenen Ausgangszustands der Batterie mit der zur Verfügung stehenden Ladeleistung wieder die volle Batteriekapazität zu erreichen. Dabei wird dann insbesondere berücksichtigt, wie lang die zweite Ladestufe dauern wird, ausgehend von Art und Dauer der vorangehenden Ladezyklen.

Besonders bevorzugt wird ausgehend von dem verbleibenden verfügbaren Energievorrat der Batterie am Ende eines Lade- oder Entladezyklus auf Grundlage einer weiteren geplanten Fahrtdauer mit zumindest einem ausgewählten Verbrauchsprofil ein weiterer Entladezyklus der Batterie berechnet und der verbleibende Energievorrat der Batterie am Ende dieses weiteren Entladezyklus vorausbestimmt. Dies bedeutet, dass die vorangehend beschriebenen Simulationen von Lade- und Entladezyklen gemäß dem erfindungsgemäßen Verfahren beliebig aneinandergereiht werden, um die gesamte Fahrt des U-Bootes oder einen Fahrtabschnitt des Unterseebootes vorauszuplanen. Dabei wird für jeden zu berechnenden Lade- oder Entladezyklus der zu Beginn dieses Zyklus bestehende Ausgangszustand der Batterie in Abhängigkeit der vorangehenden Lade- und Entladezyklen berücksichtigt. D. h. Veränderungen der Batteriekapazität bzw. des Batterieverhaltens durch vorangehende Ladezyklen, insbesondere dadurch, dass eine zweite Ladestufe nicht bis zu Ende gefahren wird, werden für die nächsten Berechnungsschritte berücksichtigt, so dass zu jedem Zeitpunkt der Fahrt das aktuelle Leistungsvermögen des Unterseebootes, insbesondere die verbleibende Restfahrzeit und die Zeit, welche mit Maximalgeschwindigkeit gefahren werden kann, vorausbestimmt bzw. simuliert werden kann.

Gemäß einer besonderen Ausführungsform des erfindungsgemäßen Verfahrens werden bei der Vorausbestimmung des verfügbaren Energievorrates der Batterie zu einem ausgewählten Zeitpunkt auch die von einer außenluftunabhängigen Energieversorgung (AIP-System), z. B. einer Brennstoffzellenanlage erzeugbare elektrische Leistung sowie die Treibstoff bzw. Reaktandenvorräte für eine solche Anlage berücksichtigt. D. h. es kann bei der Simulation bzw. Vorausberechnung der einzelnen Fahrabschnitte die gesamte bereitstellbare elektrische Leistung des Unterseebootes bestehend aus der in den Batterien gespeicherten elektrischen Energie sowie den Treibstoffvorräten für das AIP-System, z.B. Reaktandenvorräten für die Brennstoffzellenanlage, und der daraus erzeugbaren elektrischen Energie berücksichtigt werden. Ferner können einzelne Fahrtabschnitte, d. h. Lade- und Entladezyklen, des Unterseebootes so simuliert und berechnet werden, dass ein bestimmter Anteil der für den elektrischen Antrieb und/oder die übrigen Aggregate (Hotel-Load) erforderliche elektrischen Leistung von dem AIP-System, z.B. einer Brennstoffzellenanlage, bereitgestellt wird. Um den Gesamtenergievorrat des Unterseebootes zu berücksichtigen, kann auch die Menge des verfügbaren konventionellen, d. h. Dieselkraftstoffes berücksichtigt werden, wobei üblicherweise ein solcher Treibstoffvorrat ausreichend groß ist, so dass dieser bei der Fahrtplanung kein Problem darstellt.

Besonders bevorzugt werden auch die verbleibenden Treibstoffvorräte für ein außenluftunabhängiges Energieversorgungssystem, beispielsweise die Reaktandenvorräte für eine Brennstoffzellenanlage, zu einem ausgewählten Zeitpunkt vorausbestimmt. Dies erfolgt dadurch, dass bei den, wie vorangehend beschrieben, simulierten Lade- und Entladezyklen, d. h. bei den einzelnen Fahrtabschnitten des Unterseebootes auch der Verbrauch des Treibstoffs bzw. der Reaktanden für einen bestimmten Anteil elektrischer Leistung, welcher von dem AIP-System bereitgestellt wird, berücksichtigt wird. So kann zu jedem Zeitpunkt das Leistungsvermögen des Unterseebootes auf Grund der gesamten bereitstellbaren elektrischen Leistung, d. h. von Batterien und AIP-System, vorausbestimmt werden.

Weiter bevorzugt wird für den ausgewählten Zeitpunkt auf Grundlage des errechneten verbleibenden Energievorrats der Batterie sowie ggf. der verbleibenden Treibstoff- bzw. Reaktandenvorräte des AIP-Sytems eine verbleibende Restfahrzeit bei einem ausgewählten Verbrauchsprofil bestimmt. Sofern der Restenergievorrat, d. h. der Energievorrat der Batterien sowie der Vorrat an Treibstoff bzw. Reaktanden vorausbestimmt wird, kann bei bekanntem Verbrauch bzw. elektrischer Leistungsaufnahme gemäß einem gewählten Verbrauchsprofil, die verbleibende Restfahrzeit berechnet werden. Neben dem Verbrauchsprofil können aktuelle Daten über Batteriezustand, insbesondere Säuretemperatur etc. berücksichtigt werden.

Vorzugsweise wird auf Grundlage der vorangehend beschriebenen Verfahrenszyklen ein Fahrprofil des Unterseebootes derart vorausberechnet, dass einzelne Fahrtabschnitte mit ausgewählten Verbrauchsprofilen und zugehöriger Lade- und Entladeleistung der Batterie rechnerisch simuliert und zu einem gesamten Fahrprofil zusammengefügt werden, wobei jeder Fahrtabschnitt jeweils auf Grundlage der verbleibenden Energievorräte am Ende des vorangehenden Fahrtabschnittes und der Art und Dauer der vorangehend erfolgten Lade- und Entladezyklen der Batterie simuliert wird. D. h. das gesamte Fahrprofil wird schrittweise aufgebaut, wobei für jeden Fahrtabschnitt der verbleibende Energievorrat und Batteriezustand am Ende des Fahrtabschnittes vorausberechnet wird und auf dieser Grundlage dann der nächste Fahrtabschnitt simuliert wird. Dabei wird insbesondere berücksichtigt, ob in der Vorausplanung die Batterie zuvor vollständig oder nur teilweise ohne vollständige zweite Ladestufe geladen wird. Die einzelnen Fahrtabschnitte können dabei Ladezyklen darstellen, d. h. das Unterseeboot fährt aufgetaucht oder auf Schnorcheltiefe, oder Entladezyklen darstellen, in denen das Unterseeboot getaucht und außenluftunabhängig fährt. Bei der Vorausberechnung des gesamten Fahrprofils können ferner weitere Ausgangswerte vorgegeben werden, insbesondere kann dem das Programm ausführenden Rechner zuvor eingegeben werden, in welchen Fahrtabschnitten aus technischen Gründen unbedingt getaucht gefahren werden muss und in welchen Fahrtabschnitten Ladezyklen vorgesehen werden können. Die einzelnen Fahrtabschnitte mit Lade- und Entladezyklen können dann so angepasst werden, dass sie in den jeweils vorbestimmten Streckenabschnitten liegen.

Zweckmäßigerweise werden Randbedingungen der Fahrt und insbesondere mögliche Zeitpunkte und die jeweils mögliche Dauer der Lade- und Entladezyklen der Batterie über eine elektronische Seekarte eingegeben und von dieser als Ausgangsbedingungen für die Berechnung des Fahrprofils in eine Berechnungseinheit übernommen. So können in der elektronischen Seekarte die Fahrtabschnitte markiert werden, in welchen getaucht oder aufgetaucht bzw. auf Schnorcheltiefe gefahren werden kann. Ferner können für die Berechnung auch weite Randbedingungen, welche den Energieverbrauch beeinflussen, wie Wassertiefe, Strömungen und beispielsweise auch die Tauchtiefe eingegeben bzw. in die Berechnungseinheit übernommen werden. Dazu sind der Rechner der Seekarte und die Berechnungseinheit für die Erstellung des Fahrprofils miteinander gekoppelt oder laufen idealerweise auf demselben Rechnersystem ab. So kann ein integriertes System geschaffen werden.

Weiter bevorzugt wird das erstellte Fahrprofil vorzugsweise mit den relevanten den jeweiligen Fahrzustand kennzeichnenden Werten, insbesondere mit den erforderlichen Ladezyklen der Batterie in einer elektronischen Seekarte angezeigt. Dies kann beispielsweise durch farbliche Markierung der Fahrtroute je nach Fahrzustand, insbesondere zur Kennzeichnung der Ladezyklen erfolgen. Ferner können wichtige Parameter wie beispielsweise die Fahrgeschwindigkeit graphisch oder alphanumerisch auf der elektronischen Seekarte oder auf einem separaten Display angezeigt werden. Die Ergebnisse der elektronischen Fahrtplanung gemäß dem vorangehend beschriebenen Verfahren werden in verschiedener Form auf einer Anzeigeeinrichtung, beispielsweise einem Bildschirm mit allen relevanten Daten ausgegeben. Dazu können beispielsweise verschiedene Graphiken oder Kurven ausgegeben werden, welche den Verlauf des Leistungsvermögens, d. h. insbesondere der Batteriekapazität über die simulierte Fahrtdauer anzeigen.

Das Fahrprofil wird ferner bevorzugt derart erstellt, dass zu keinem Zeitpunkt die Batteriekapazität unter eine vorwählbare Grenzkapazität fällt. Diese einstellbare Grenzkapazität ist beispielsweise die Restkapazität, welche zur Batterielebensdauererhaltung bzw. zur Erzielung einer längeren Batterielebensdauer nicht unterschritten werden sollte. Dies kann zum Beispiel eine Restkapazität von 20% sein. Ferner kann eine solche Grenzkapazität diejenige Restkapazität sein, welche erforderlich ist, damit das Unterseeboot mit dem elektrischen Antrieb seine Maximalgeschwindigkeit über eine vorbestimmte Zeitgröße erreichen kann. Dazu kann zusätzlich die von einem AIP-System, z.B. einer Brennstoffzellenanlage, erzeugbare elektrische Leistung berücksichtigt werden. So kann der Fahrprofilrechner erforderliche Ladezyklen bestimmen, welche so gelegt sind, dass immer eine ausreichende Batteriekapazität gegeben ist und der verbleibende Energievorrat nie unter die vorgegebene Grenzkapazität fällt.

Weiter bevorzugt werden Parameter der aktuellen Betriebszustände, insbesondere Batteriekapazität, Batterietemperatur, Lade- und Entladeleistung der Batterie, Lade- und Entladezeiten, die Leistungsaufnahme sämtlicher Aggregate sowie die Generatorleistung des Unterseebootes kontinuierlich erfasst und dienen diese Parameter als Ausgangsdaten für die rechnerische Bestimmung des verbleibenden Energievorrates der Batterie zu dem ausgewählten zukünftigen Zeitpunkt. Ferner können auch aktuelle Betriebsparameter eines AIP-Systems, insbesondere die abgegebene elektrische Leistung und die verbleibenden Treibstoff- bzw. Reaktandenvorräte kontinuierlich erfasst werden und in die Berechnung einfließen. Ferner können die Daten zur Dokumentation oder als Grundlage für spätere Berechnungen gespeichert werden. Somit ist es möglich, auf Grundlage dieser Daten noch genauere Vorausberechnungen des verbleibenden Energievorrates zu erstellen.

Darüber hinaus können die erfassten aktuellen Betriebszustände dazu verwendet werden, bereits erfolgte Berechnungen des Energievorrates bzw. ein vorangehend erstelltes Fahrprofil zu korrigieren. Dies kann beispielsweise dann erforderlich sein, wenn die tatsächlichen Fahrbedingungen von dem der Berechnung zugrunde gelegten Verbrauchsprofil abweichen, beispielsweise wenn aufgrund eines taktischen Manövers die Fahrgeschwindigkeit, der Kurs oder Tauchtiefe geändert werden muss. Die kontinuierlich erfassten Betriebsparameter können dann dazu verwendet werden, automatisch oder auch manuell ausgelöst auf Grundlage der geänderten Werte das Fahrprofil zu korrigieren, so dass möglichst genau die verbleibenden Energievorräte für zukünftige Zeitpunkte bestimmt werden können.

Nachfolgend wird die Erfindung beispielhaft anhand der beigefügten Diagramme beschrieben. In diesem zeigt:
- Fig. 1: schematisch den Aufbau eines Fahrprofilrechners zur Ausführung des erfindungsgemäßen Verfahren,
- Fig. 2: schematisch den Verfahrensablauf zur Vorausbestimmung des verbleibenden Energievorrats zu einem bestimmten Zeitpunkt und
- Fig. 3: schematisch den Verfahrensablauf zur Vorausbestimmung eines Fahrprofils,
wobei in den Flussdiagrammen gemäß Fig. 2 und Fig. 3 J = Ja und N = Nein bedeutet.

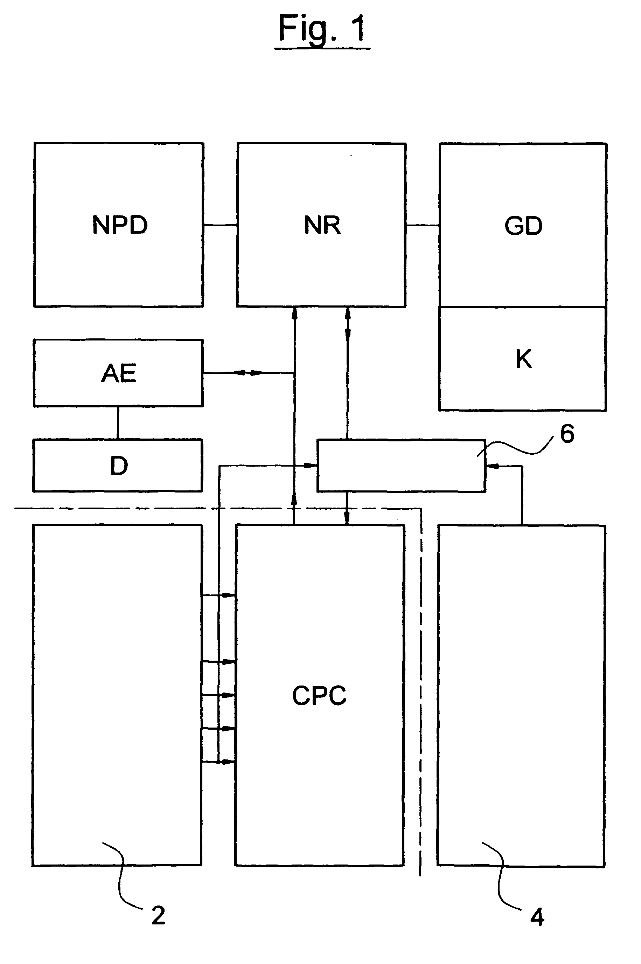

Fig. 1 zeigt schematisch den Aufbau eines Systems, in welchem ein Fahrprofilrechner integriert ist, um das erfindungsgemäße Verfahren zur Planung der Fahrt eines Unterseebootes auszuführen. Das erläuterte Beispiel betrifft einen Fahrprofilrechner, welcher in ein Unterseeboot integriert ist und dort mit einem vorhandenen Navigationssystem zusammen arbeitet. Das Navigationssystem bildet dabei die Schnittstelle zur Datenein- und ausgabe. Das Navigationssystem weist einen Navigationsrechner NR auf, welcher mit einem Navigationsplanungsdisplay NPD verbunden ist, welches in einer elektronischen Seekarte die geplante und aktuelle Fahrstrecke darstellt. Ferner ist der Navigationsrechner mit einem Grafikdisplay GD verbunden, welches zur Darstellung aktueller Fahrdaten sowie der vorausberechneten Fahrprofile und insbesondere dem vorausberechneten Kapazitätsverlauf der Batterien in graphischer oder numerischer Form dient. Ferner weist die Anlage eine Eingabeeinrichtung K beispielsweise in Form einer Tastatur auf. Der Navigationsrechner NR kommuniziert ferner mit einer Ausgabeeinrichtung AE, welche vorgesehen ist, um Dateien oder Dokumente D auszugeben. Die Ausgabeeinrichtung kann beispielsweise ein Disketten- oder CD-Laufwerk oder ein Drucker sein. Sofern es sich um ein Datenträgerlaufwerk handelt, kann die Ausgabeeinrichtung auch dazu verwendet werden, Daten in den Navigationsrechner einzulesen bzw. zu übertragen. Der Navigationsrechner NR kommuniziert über Schnittstellen mit dem Fahrprofilrechner CPC. Der Navigationsrechner NR und der Fahrprofilrechner CPC können als separate Rechnereinheiten bzw. Computersysteme ausgebildet sein, welche über entsprechende Schnittstellen kommunizieren. Alternativ können Fahrprofilrechner CPC und Navigationsrechner NR als Softwaremodule auf demselben Rechnersystem.

Der Fahrprofilrechner CPC übermittelt zur Ausgabe bzw. Anzeige der Ergebnisse seine Rechenergebnisse direkt an den Navigationsrechner NR, welcher die Ergebnisse entweder auf dem Navigationsplanungsdisplay NPD, d. h. auf der elektronische Seekarte darstellt oder auf dem separaten Grafikdisplay graphisch oder numerisch ausgibt. Umgekehrt überträgt der Navigationsrechner NR auch Eingangsdaten, insbesondere Daten über die geplante Fahrstrecke, welche über das Navigationsplanungsdisplay NPD oder die Eingabeeinrichtung K eingegeben werden an den Fahrprofilrechner CPC. Ferner ist ein Datenspeicher 2 vorgesehen, in welchem Ausgangs- bzw. Basisdaten und insbesondere bestimmte Verbrauchsprofile abgelegt sind. Solche Daten können beispielsweise Propellerdrehzahl für verschiedene Fahrzustände, beispielsweise Schnorchelfahrt, Schleichfahrt, etc., Daten über Batterietyp, Dieselantrieb, AIP-System (z.B. Brennstoffzellenanlage) und sonstige Konstanten und Faktoren beinhalten, welche der Fahrprofilrechner CPC zur Vorausplanung des Fahrprofils benötigt. Diese Daten werden entweder als Ausgangsdaten für eine einmalige Berechnung in den Fahrprofilrechner CPC übertragen oder als Online-Daten 6 kontinuierlich für die Aktualisierung eines erstellten Fahrprofils sowohl dem Fahrprofilrechner CPC als auch dem Navigationsrechner NR bereitgestellt. Ferner sind Datenerfassungseinrichtungen 4 vorgesehen, welche aktuelle Betriebsdaten des Unterseebootes, wie beispielsweise Geschwindigkeit, Propellerdrehzahl, Batteriespannung und -strom, Batteriekapazität bzw. Ladezustand, Säuretemperatur, Motorstrom, Generatorstrom, aktuelle Leistung bzw. der aktuelle Strom der übrigen Verbraucher (Hotel-Load) Treibstoffvorrat und Vorrat an Reaktanden für eine Brennstoffzellenanlage erfasst. Diese Daten werden als Online-Daten 6 dem Navigationsrechner NR und dem Fahrprofilrechner CPC bereitgestellt.

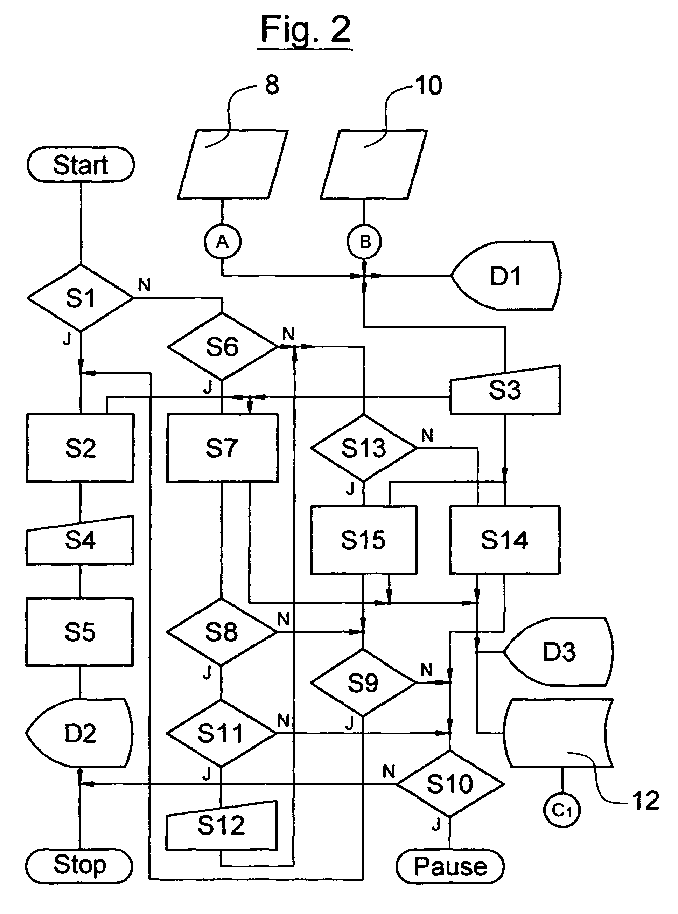

Fig. 2 zeigt den Verfahrensablauf zur Vorausbestimmung bzw. Prognose der verbleibenden Leistungsfähigkeit bzw. der Restfahrzeit des Unterseebootes. Nach dem Beginn des Verfahrens wird im Schritt S1 entschieden, ob ausgehend von den aktuell verfügbaren Energievorräten die Restfahrzeit bzw. Restleistungsfähigkeit des Unterseebootes bestimmt werden soll. Falls dies bestimmt werden soll, findet im Schritt S2 eine entsprechende Berechnung statt, wobei in diese aktuelle Daten 8 und/oder gespeicherte Daten 10 aus einem Datenspeicher 2 einfließen können. Aktuelle Daten können beispielsweise Daten über die noch verfügbare Batteriekapazität, Batterietemperatur, verbleibende Treibstoff- bzw. Reaktandenvorräte eines AIP-Systems, etc. sein. Die gespeicherten Daten beinhalten insbesondere Verbrauchsprofile, welche Verbrauchswert für verschiedene Fahrzustände angeben, welche den Energieverbrauch sämtlicher Systeme und des Antriebs des Unterseebootes in einem jeweiligen Fahrzustand, beispielsweise Schleichfahrt, Volllast, etc. angeben. Die Daten 8 und 10 können auf einer Anzeigevorrichtung, insbesondere auf dem vorangehend beschriebenen Grafikdisplay GD im Schritt D1 zur Anzeige gebracht werden und dann im Schritt S3 manuell oder automatisch ausgewählt werden. Hier kann insbesondere ein für die geplante Fahrsituation passendes Verbrauchsprofil ausgewählt oder dessen Berechnung bzw. Interpolation veranlasst werden. Die im Schritt S3 ausgewählten Daten werden bei der Berechnung im Schritt S2 berücksichtigt. Im Schritt S4 kann dann die Anzeigeweise der ermittelten Leistungsfähigkeit bzw. der prognostizierten Leistungsfähigkeit des Unterseebootes ausgewählt werden, beispielsweise ob die Daten numerisch oder graphisch auf dem Grafikdisplay GD oder auch direkt in der elektronischen Seekarte des Navigationsplanungsdisplays NPD ausgegeben werden sollen. Im Schritt S5 findet dann eine entsprechende Datenaufbereitung und im Schritt D2 die gewählte Ausgabe der Daten statt. Damit ist die Grundstufe der Vorausberechnung der verbleibenden Leistungsfähigkeit des Unterseeboots hinsichtlich seines Energievorrates beendet.

Bei dem im Schritt S3 auszuwählenden und im Schritt S2 bei der Berechnung zu berücksichtigten Daten werden insbesondere alle Abläufe seit Beginn einer Fahrperiode berücksichtigt, insbesondere vorangehende Lade- und Entladevorgänge der Batterie, welche Einfluss auf die aktuelle Leistungsfähigkeit bzw. Kapazität der Batterie haben, d. h. z. B. ob eine zweite Ladestufe zu Ende gefahren wurde oder nicht. Ferner können vom Benutzer bestimmte Grundwerte vorgegeben werden, beispielsweise, dass die Batteriekapazität nicht unter 50% abfallen soll, um immer die Möglichkeit beizubehalten, das Unterseeboot außenluftunabhängig mit Maximalgeschwindigkeit zu fahren. Ferner kann ausgewählt werden, wie viel Prozent der erforderlichen elektrischen Leistung zusätzlich von einem AIP-System, sofern vorhanden, bereitgestellt werden soll. Zusätzlich kann das System bevorzugt auch so eingestellt werden, dass automatische Neuberechnungen erfolgen, wenn sich in die aktuellen Daten 8, welche für die jeweilige Berechnung relevant sind, ändern. So können auf dem Navigationsplanungsdisplay NPD sowohl die vorausberechneten Wegpunkte und Daten als auch jeweils der aktuelle Standort und die aktuellen Parameter angezeigt werden, so dass eine ständige Überwachung der Fahrt möglich ist.

Zusätzlich ist mit dem Verfahren die Berechnung der erforderlichen Schnorchelzeit bzw. Zeit, in der aufgetaucht gefahren werden muss, möglich, um die Batterien wieder aufzuladen. Ferner ist es möglich einen aktuellen Entladevorgang zu überwachen bzw. zu planen. Wenn dazu im Schritt S 1 die Entscheidung "Nein" getroffen wird, wird im Schritt S6 entschieden, ob ein Entlade- oder ein Ladevorgang berechnet werden soll. Falls ja, wird im Schritt S7 ein Entladevorgang simuliert bzw. berechnet, wobei auf die im Schritt S3 ausgewählten Daten zurückgegriffen wird, insbesondere auf ein gewähltes Verbrauchsprofil und die aktuelle Batteriecharakteristik bzw. -kapazität, welche insbesondere von vorangehenden Lade- und Entladezyklen abhängig sein kann. Das Ergebnis der Berechnung im Schritt S7 wird dann im Schritt D3 beispielsweise auf dem Grafikdisplay GD ausgegeben. Im anschließenden Schritt S8 wird ermittelt, ob die vorgewählte Endkapazität der Batterie erreicht ist. Falls die Endkapazität noch nicht erreicht ist, wird im Schritt S9 geprüft bzw. abgefragt, ob entsprechend die verbleibende Restfahrzeit bzw. Restkapazität berechnet werden soll. Falls ja, beginnt das vorangehend beschriebene Verfahren mit Schritt S2.

Falls nein, wird im Schritt S10 geprüft, ob eine erneute Berechnung beginnend mit Schritt S1 gewünscht ist. Falls die Abfrage bzw. Prüfung im Schritt S10 den Wert "Nein" ergibt, ist das Verfahren beendet.

Wenn die Abfrage im Schritt S8 mit "Ja" beantwortet wird, d. h., wenn die Endkapazität der Batterie erreicht ist, schließt sich die Abfrage S11 an, ob im nächsten Schritt ein Ladevorgang simuliert bzw. berechnet werden soll. Falls die Abfrage mit "Nein" beantwortet wird, schließt sich der beschriebene Schritt S10 an. Falls die Abfrage mit "Ja" beantwortet ist, schließt sich eine Berechnung des Ladevorganges an, wobei zunächst im Schritt S12 ein Geschwindigkeitswert für die aufgetauchte bzw. Schnorchelfahrt, welche zum Aufladen der Batterien mit Hilfe der Verbrennungsmotoren erforderlich ist, eingegeben wird. Anschließend schließt sich der Schritt S13 an, zu welchem das Verfahren auch gelangt, wenn die Abfrage im Schritt S6 mit "Nein" beantwortet wird, d. h. für den Fall, dass kein Entladevorgang, sondern gleich ein Ladevorgang berechnet werden soll.

Im Schritt S13 wird abgefragt, ob es für den Ladevorgang eine Begrenzung gibt oder nicht. Falls nein, schließt sich der Schritt S14 an, in welchem unter Berücksichtigung der im Schritt S3 ausgewählten Randparameter ein vollständiger Ladevorgang simuliert bzw. berechnet wird. Dabei werden die ausgewählten bzw. erforderlichen aktuellen Daten 8 und gespeicherten Daten 10 berücksichtigt, welche insbesondere die aktuelle Batteriekapazität, Batterietemperatur, Batterietyp, zur Verfügung stehende Ladeleistung und auch die Art der vorangehenden Ladevorgänge berücksichtigen. So kann der aktuelle Batteriezustand berücksichtigt werden. Dies ist beispielsweise bei Bleiakkumulatoren wichtig, um zu ermitteln, wie lange in der ersten Ladestufe, in welcher mit maximalem Ladestrom geladen wird, und wie lange in der zweiten Ladestufe mit verringertem Ladestrom geladen werden muss, um die volle Kapazität der Batterie wieder herzustellen. Die maximal zur Verfügung stehende Ladeleistung hängt insbesondere vom Verbrauch der übrigen elektrischen Verbraucher und des Antriebs, d. h. von der gewählten Fahrgeschwindigkeit sowie von äußeren Bedingungen, Strömungen, Nähe zur Küste bzw. zum Grund etc. ab, wobei diese Werte im Schritt S3 entsprechend ausgewählt bzw. eingegeben werden können. Auf diese Weise wird im Schritt S14 ein vollständiger Ladezyklus bis zum Erreichen der vollen Batteriekapazität simuliert. Das Ergebnis wird anschließend im Schritt D3 beispielsweise auf dem Grafikdisplay GD oder dem Navigationsplanungsdisplay NPD angezeigt. An den Schritt S14 schließt sich der bereits beschriebene Schritt S10 an.

Wird die Abfrage im Schritt S13 mit "Ja" beantwortet, schließt sich der Schritt S15 an. Eine Ladungsbegrenzung, welche bei Beantwortung der Abfrage in S13 mit "Ja" vorliegt, kann beispielsweise dadurch gegeben sein, dass das Unterseeboot nur eine beschränkte Zeit aufgetaucht oder auf Schnorcheltiefe fahren kann, da ansonsten die Gefahr einer Entdeckung zu groß wäre. Im Schritt S15 wird ein teilweiser Ladevorgang simuliert, wobei auch hier die im Schritt S3 ausgewählten bzw. bereitgestellten Daten wie aktuelle Batteriecharakteristik und - kapazität, insbesondere die Art der vorangehenden Ladungen, sowie die zur Verfügung stehende Ladeleistung berücksichtigt werden. Im Falle von Bleiakkumulatoren wird im Schritt S15 beispielsweise berechnet, wie lange mit maximalen Ladestrom in der ersten Ladestufe geladen werden kann und welcher Anteil der zweiten Ladestufe gefahren werden kann, bevor der Ladevorgang aufgrund der Beschränkung abgebrochen wird. Wie auch beim Schritt S14 wird der durch die berechnete Ladung erreichbare Zustand der Batterie, d. h. die erreichbare Batteriekapazität bzw. der am Ende des Ladevorgangs zur Verfügung stehende Energievorrat im Schritt D3 zur Anzeige gebracht.

Alle im Schritt D3 in graphischer oder numerischer Weise zur Anzeige gebrachten Berechnungs- bzw. Simulationsergebnisse werden ferner in einem Datenspeicher 12 abgelegt. Dort wird insbesondere der vorausberechnete Energievorrat der Batterie bzw. der vorausgeplanten Zustand der Batterien gespeichert.

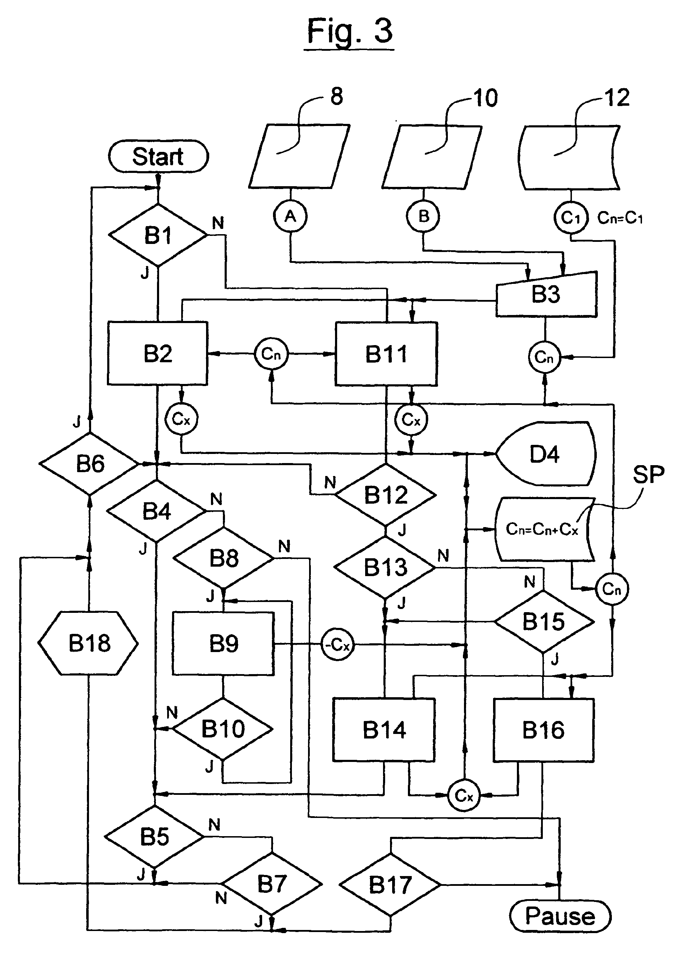

Anhand von Fig. 3 wird nun erläutert, wie mit dem erfindungsgemäßen Verfahren ausgehend von dem anhand von Fig. 2 erläuterten Verfahren ein gesamtes Fahrprofil konstruiert werden kann. Das gesamte Fahrprofil setzt sich aus einer Aneinanderreihung einzelner Lade- und Entladezyklen zusammen. Diese werden durch unterschiedlich Fahrzustände des Unterseebootes definiert, in denen das Unterseeboot entweder außenluftunabhängig getaucht fährt oder außenluftabhängig aufgetaucht oder im Schnorchelbetrieb fährt. In den Fahrzuständen, in denen das Unterseeboot außenluftunabhängig fährt, werden die Batterien üblicherweise entladen, sofern nicht ausschließlich ein verfügbares AIP-System wie z.B. eine Brennstoffzellenanlage zur Erzeugung elektrischer Energie zum Einsatz kommt. In den Fahrzuständen, in denen das U-Boot aufgetaucht oder schnorchelnd fährt, kann ein Verbrennungsmotor betrieben werden, um über einen Generator die Batterien wieder zu laden.

Zur Erstellung eines gesamten Fahrprofils wird gemäß dem Verfahrensablauf in Fig. 3 im Schritt B1 zunächst eine Entscheidung getroffen, ob ein Lade- oder Entladezyklus berechnet bzw. simuliert werden soll. Sofern die Abfrage mit "Ja" beantwortet wird, schließt sich im Schritt B2 die Berechnung eines Entladezyklus an. Dies entspricht im Wesentlichen der anhand von Fig. 2 erläuterten Vorgehensweise. Für die Berechnung im Schritt B2 werden aktuelle Daten 8, gespeicherte Daten 10 und ferner die im Datenspeicher 12 abgelegten Ergebnisse eines simulierten vorangehenden Lade- bzw. Entladezykluses berücksichtigt. Die im Datenspeicher 12 abgelegten Daten entsprechen den am Ende des Verfahrensablaufes gemäß Fig. 2 im Datenspeicher 12 gespeicherten Ergebnisdaten. Die aktuellen Daten 8 sowie die gespeicherten Daten 10 werden im Schritt B3 zur Auswahl durch einen Bediener angeboten, wobei dies dem anhand von Fig. 2 erläuterten Schritt S3 entspricht. Das Ergebnis der Auswahl wird im Schritt B2 zur Simulation des Entladevorganges berücksichtigt. Dies ist insbesondere ein ausgewähltes Verbrauchsprofil. Ferner ist dies die aus dem Datenspeicher 12 ausgelesene vorausberechnete Kapazität bzw. der vorausberechnete Energievorrat der Batterie, welcher als Größe Cₙ dem Schritt B3 und dem Rechenschritt B2 als Grundlage zugeführt wird. Dies bedeutet, dass im Schritt B3 manuell ausgewählt werden kann, ob die Berechnung auf Grundlage einer vorangehend berechneten Batterierestkapazität nach einem vorangehenden Lade- oder Entladenzyklus begonnen wird. Die Berücksichtigung dieser Daten kann auch automatisch erfolgen, was bei der Erstellung komplexer Fahrprofile wünschenswert ist. In dem sich an den Schritt B2 anschließenden Schritt B4 wird geprüft, ob fortgefahren werden soll. Falls diese Auswahl mit "Ja" bestätigt wird, schließt sich der Schritt B5 an, in welchem entschieden wird, ob ein weiterer bzw. neuer Lade- oder Entladezyklus berechnet werden soll. Falls diese Entscheidung mit "Ja" beantwortet wird, schließt sich der Schritt B6 an, in welchem geprüft wird, ob bestimmte Grenzwerte, beispielsweise vorgewählte Grenzwerte für die Restkapazität der Batterie eingehalten werden. Falls auch diese Abfrage mit "Ja" beantwortet wird, schließt sich mit dem Schritt B1 die Berechnung eines neuen Lade- oder Entladezyklus an.

Das Ergebnis des Berechnungsschrittes B2 (Cₓ), d. h. insbesondere die sich ergebene Restkapazität der Batterie wird ferner im Schritt D4 beispielsweise in dem Grafikdisplay zur Anzeige gebracht. Ferner wird im Schritt SP gespeicherte der Ausgangswert Cₙ durch Addition des Ergebnisses Cₓ der vorangehenden Berechnung als Ausgangsgröße für den nächsten Berechnungsschritt angepasst und gespeichert. Insbesondere wird die Ausgangskapazität der Batterie für den nächsten zu berechnenden Lade- bzw. Entladezyklus auf den Endwert des berechneten vorangehenden Lade- bzw. Entladezyklus gesetzt. Wenn im Schritt B5 festgelegt wird, dass keine neue Periode bzw. kein neuer Lade- oder Entladezyklus berechnet werden soll, wird im Schritt B7 entschieden, ob die Erstellung des Fahrprofils beendet ist oder nicht. Falls ja, wird im Schritt B18 die Berechnung eines neuen Fahrprofils vorbereitet, welche wieder mit dem Schritt B1 beginnt. Falls entschieden wird, dass die Berechnung des Fahrprofils nicht beendet ist, schließt sich der Schritt B6 und anschließend die Berechnung eines weiteren Lade- oder Entladezykluses beginnend mit dem Schritt B1 an.

Wenn im Schritt B4 entschieden wird, dass nicht fortgefahren werden soll, schließt sich der Schritt B8 an, in dem entschieden wird, ob die letzte berechnete Periode gelöscht werden soll oder nicht. Falls ja, schließt sich Schritt B9 an, in dem die zuletzt berechneten Daten gelöscht werden und eine Ausgabegröße -Cₓ ausgegeben wird, welche im Schritt SP berücksichtigt wird, um den durch Addition der Ausgangsgröße Cₓ des Schrittes D2 geänderten Wert Cₙ wieder entsprechend zurückzusetzen. Im Schritt B10 schließt sich dann eine Abfrage an, ob noch weiter zurückliegende Zyklen des Fahrprofils gelöscht werden sollen. Falls ja, schließt sich erneut der Schritt B9 an, falls nein, schließt sich der bereits beschriebene Schritt B5 an.

Wird im Schritt B8 festgestellt, dass die Werte nicht gelöscht werden sollen, ist das Verfahren beendet.

Wird im Schritt B1 festgestellt, dass kein Entladevorgang errechnet werden soll, d. h. die Abfrage mit "Nein" beantwortet, schließt sich der Schritt B11 an, in welchem ein Ladezyklus simuliert bzw. berechnet wird. Der Berechnungsschritt B11 erhält wieder als Eingangsgrößen die im Schritt B3 ausgewählten gespeicherten und aktuellen Daten 8 und 10, ferner den Kapazitätswert bzw. die den Batteriezustand charakterisierenden Werte Cₙ, welche sich am Ende des vorangehend berechneten Zyklus ergeben. Das Ergebnis Cₓ am Ende des simulierten Ladezyklus wird wiederum im Schritt D4 ausgegeben und im Schritt SP als neue Ausgangsgröße für einen sich anschließenden Zyklus gesetzt. Die Berechnung des Ladeszykluses im Schritt B11 erfolgt, wie anhand von Fig. 2 anhand der Schritte S14 und S15 erläutert. Im Schritt B12 schließt sich eine Abfrage an, ob berechnete Zyklen wiederholt werden sollen. Falls nein, schließt sich der bereits beschriebene Schritt B4 an. Falls ja, schließt sich der Schritt B13 an, in welchem entschieden wird, ob ein Zwischenlade- oder Entladezyklus wiederholt werden soll. Falls ja, schließt sich Schritt B14 an, in welchem die Multiplikation bzw. Vervielfachung eines bereits berechneten Zwischenzyklus erfolgt. Der Ausgangswert Cₓ des Schrittes B14 wird wieder dem Schritt SP zugeführt, um dort den Wert Cₙ durch Addition des Wertes Cₓ als Ausgangswert für den nächsten zu berechnenden Zyklus zu setzen. An den Schritt B14 schließt sich dann der bereits beschriebene Schritt B5 an. Wird im Schritt B13 entschieden, dass kein Zwischenzyklus multipliziert werden soll, schließt sich der Schritt B15 an, in dem entschieden wird, ob die Berechnung des gesamten Fahrprofils abgeschlossen ist. Falls ja, schließt sich im Schritt B 16 die Vervielfachung des gesamten Fahrprofils bzw. Eines Teilprofils, bestehend aus einzelnen Lade- und Entladezyklen an. Der Ausgangswert Cₓ wird wie beschrieben im Schritt SP als Ausgangsgröße für die nächsten Berechnungen weiter verarbeitet. Anschließend schließt sich der Schritt B17 an, in welchem entschieden wird, ob das nächste Fahrprofil erstellt werden soll, woraufhin sich der bereits beschriebene Schritt B18 anschließt. Soll kein nächstes Fahrprofil erstellt werden, ist das Verfahren mit dem Schritt B17 beendet. Wird im Schritt B15 entschieden, dass das gesamte Fahrprofil noch nicht beendet ist, schließt sich der bereits beschriebene Schritt B14 an.

Auf die beschriebene Weise können einzelne Lade- und Entladezyklen aneinandergereiht werden, um auf diese Weise ein Fahrprofil der gesamten Fahrt des Unterseebootes oder eines Teilabschnittes der Fahrt eines Unterseebootes vorauszuplanen. Als Ausgangsdaten können dazu bevorzugt zunächst auf einer elektronischen Seekarte besonders gefährlich Abschnitte markiert werden, in denen unbedingt getaucht, d. h. außenluftunabhängig gefahren werden muss, so dass in diesen Fahrtabschnitten eine ausreichende Batteriekapazität zur Verfügung stehen muss. Dann können in der elektronischen Seekarte die Bereiche markiert werden, in denen kurz oder auch länger geschnorchelt oder aufgetaucht gefahren werden kann. Anschließend können für die so aufgeteilte Fahrtstrecke in der beschriebenen Weise für die einzelnen Fahrtabschnitte, in denen außenluftabhängig oder außenluftunabhängig gefahren wird die einzelnen Lade- und Entladezyklen simuliert und vorausbestimmt werden, so dass die Fahrt so geplant werden kann, dass in jeder Fahrsituation eine ausreichende Batteriekapazität zur Verfügung steht, um die gewünschten taktischen Manöver ausführen zu können.

Darüber hinaus ist, wie anhand von Fig. 2 beschrieben, durch das erfindungsgemäße Rechnersystem bzw. Verfahren die Möglichkeit gegeben, zu jedem Zeitpunkt die verbleibende Restfahrdauer mit dem vorhandenen Energievorrat zu bestimmen, so dass auch für zukünftige Zeitpunkte die Leistungsfähigkeit des Unterseebootes vorausbestimmt werden kann.

Erfindungswesentlich ist bei allen Berechnungen, dass vorangehende Ladezyklen, erfolgte oder vorausberechnete, für die Berechnung sich später anschließender Lade- und Entladezyklen berücksichtigt werden, d. h. insbesondere ob in einem Ladezyklus eine zweite Ladestufe vollständig durchlaufen wird, vorzeitig abgebrochen wird oder gar nicht erfolgt. Der sich daraus ergebende, prognostizierte Batteriezustand, z. B. eine früher einsetzende Gasung, wird nachfolgenden Berechnungen zugrunde gelegt.

Die Berechnung eines gesamten Fahrprofils beginnt ausgehend von einer vollständig geladenen Batterie, d. h. mit 100% Batteriekapazität bis zu einer vorbestimmten Entladegrenze, und endet, wenn dieser vollständig geladene Zustand der Batterie wieder erreicht wird. Zwischen diesen beiden Zuständen können verschiedene Lade- und Endladezyklen liegen, in welchen die Batterie nicht vollständig geladen wird, d. h. insbesondere die zweite Ladestufe nicht vollständig zu Ende gefahren wird. Diese Ladezyklen können, wie vorangehend beschrieben, durch das erfindungsgemäße Verfahren bzw. Programm vorausberechnet und simuliert werden, so dass sich die gesamte Fahrt entsprechend vorausplanen lässt.

Das Verfahren bzw. die Anlage ist zunächst dafür konzipiert, direkt auf einem Unterseeboot eingesetzt und dort in ein Rechnersystem integriert zu werden. Alternativ kann das Verfahren auch in einer Operationszentrale eingesetzt werden, um beispielsweise den Einsatz eines Unterseebootes oder auch der gesamten Unterseebootflotte dort entsprechend planen und koordinieren zu können. Weiter ist es möglich, bei Kenntnis gewisser Grunddaten, auch die Fahrt möglicher feindlicher Unterseeboote zu simulieren, da es mit dem erfindungsgemäßen Verfahren möglich ist zu prognostizieren, in welchen Abschnitten, die Boote auftauchen müssen, um ihre Batterien aufzuladen. Ferner kann das Verfahren bzw. ein das Verfahren ausführendes Computerprogramm oder eine das Verfahren ausführende Anlage auch zur Ausbildung, beispielsweise von Unterseebootbesatzungen, in Trainings-Centern an Land eingesetzt werden.

### Bezugszeichenliste

- NPD: Navigationsplanungsdisplay
- NR: integriertes Navigationssystem
- GD: Grafikdisplay
- K: Eingabeeinrichtung
- AE: Ausgabeeinrichtung
- D: Dokument
- CPC: Fahrprofilrechner
- 2: Datenspeicher
- 4: Datenerfassungseinrichtung
- 6: Online-Daten
- 8: aktuelle Daten
- 10: gespeicherte Daten
- 12: Datenspeicher

## Patentansprüche

1. Verfahren zur Fahrtplanung eines Unterseebootes, welches zumindest einen elektrischen Antrieb mit einer Batterie zur Energieversorgung und eine Ladeeinrichtung für die Batterie aufweist, bei welchem
für einen ausgewählten zukünftigen Zeitpunkt der verbleibende verfügbare Energievorrat der Batterie auf Grundlage
der Fahrtdauer bis zu diesem Zeitpunkt,
zumindest eines für die Fahrtdauer ausgewählten Verbrauchsprofiles und
der Art und Dauer der bis zu diesem Zeitpunkt erfolgenden Ladezyklen der Batterie vorausbestimmt wird.

2. Verfahren nach Anspruch 1, bei welchem ausgehend von einem Anfangsladezustand mit maximaler Batteriekapazität auf Grundlage einer geplanten Fahrtdauer mit zumindest einem ausgewählten Verbrauchsprofil ein erster Entladezyklus der Batterie simuliert und der verbleibende Energievorrat der Batterie am Ende dieses ersten Entladezyklus vorausbestimmt wird.

3. Verfahren nach Anspruch 1 oder 2, bei welchem ausgehend von dem verbleibenden Energievorrat der Batterie am Ende eines Entladezyklus ein Ladezyklus unter Berücksichtigung einer ausgewählten Ladezeit und der zur Verfügung stehenden Leistung der Ladeeinrichtung simuliert und der verfügbare Energievorrat der Batterie am Ende dieses Ladezyklus vorausbestimmt wird.

4. Verfahren nach Anspruch 2 oder 3, bei welchem ausgehend von dem verbleibenden verfügbaren Energievorrat der Batterie am Ende eines Lade- oder Entladezyklus auf Grundlage einer weiteren geplanten Fahrtdauer mit einem ausgewählten Verbrauchsprofil ein weiterer Entladezyklus der Batterie simuliert und der verbleibende Energievorrat der Batterie am Ende dieses weiteren Entladezyklus vorausbestimmt wird.

5. Verfahren nach einem der vorangehenden Ansprüche, bei welchem bei der Vorausbestimmung des verfügbaren Energievorrates der Batterie zu einem ausgewählten Zeitpunkt auch die von einer außenluftunabhängigen Energieversorgung erzeugbare elektrische Leistung sowie die Treibstoff- und Reaktandenvorräte für die außenluftabhängige Energieversorgung berücksichtigt werden.

6. Verfahren nach Anspruch 5, bei welchem auch die verbleibenden Treibstoff- bzw. Reaktandenvorräte zu dem ausgewählten Zeitpunkt vorausbestimmt werden.

7. Verfahren nach einem der vorangehenden Ansprüche, bei welchem für den ausgewählten Zeitpunkt auf Grundlage des errechneten verbleibenden Energievorrates der Batterie sowie gegebenenfalls der verbleibenden Treibstoff- bzw. Reaktandenvorräte einer außenluftunabhängigen Energieversorgung eine verbleibende Restfahrzeit bei einem ausgewählten Verbrauchsprofil bestimmt wird.

8. Verfahren nach einem der vorangehenden Ansprüche, bei welchem ein Fahrprofil des Unterseebootes derart vorausberechnet wird, dass einzelne Fahrtabschnitte mit ausgewählten Verbrauchsprofilen und zugehöriger Lade- und Entladeleistung der Batterie rechnerisch simuliert und zu einem gesamten Fahrprofil zusammengefügt werden, wobei jeder Fahrtabschnitt jeweils auf Grundlage der verbleibenden Energievorräte am Ende des vorangehenden Fahrtabschnittes und der Art und Dauer der vorangehend erfolgenden Lade- und Entladezyklen der Batterie simuliert wird.

9. Verfahren nach Anspruch 8, bei welchem Randbedingungen der Fahrt und insbesondere mögliche Zeitpunkte und die jeweils mögliche Dauer der Lade- und Entladezyklen der Batterie über eine elektronischen Seekarte (NPD) eingegeben werden und von dieser als Ausgangsbedingungen für die Berechnung des Fahrprofils in einer Berechnungseinheit (CPC) übernommen werden.

10. Verfahren nach Anspruch 8 oder 9, bei welchem das erstellte Fahrprofil vorzugsweise mit den relevanten den jeweiligen Fahrzustand kennzeichnenden Werten, insbesondere mit den erfordertichen Ladezyklen der Batterie, in einer elektronischen Seekarte (NPD) angezeigt wird.

11. Verfahren nach einem der Ansprüche 8 bis 10, bei welchem das Fahrprofil derart erstellt wird, dass zu keinem Zeitpunkt die Batteriekapazität unter eine vorwählbare Grenzkapazität fällt.

12. Verfahren nach einem der vorangehenden Ansprüche, bei welchem Parameter der aktuellen Betriebszustände, insbesondere Batteriekapazität, Batterietemperatur, Lade- und Entladeleistung der Batterie, Lade- und Entladezeiten, die Leistungsaufnahme sämtlicher Aggregate sowie die Generatorleistung des Unterseebootes kontinuierlich erfasst werden und diese Parameter als Ausgangsdaten für die rechnerische Bestimmung des verbleibenden Energievorrates der Batterie zu dem ausgewählten zukünftigen Zeitpunkt dienen.

13. Verfahren nach Anspruch 12, bei welchem auf Grundlage der erfassten aktuellen Betriebszustände vorangehend erfolgte Berechnungen des Energievorrates bzw. ein vorangehend erstelltes Fahrprofil korrigiert wird.

## Claims

1. A method for planning the journey of a submarine, which comprises at least one electric drive with a battery for energy supply, and a charging means for the battery, with which for a selected future point in time, the remaining available energy reserve of the battery is predicted on the basis of the travel duration up to this point in time, of at least one consumption profile selected for the travel duration and of the type and duration of the charging cycles of the battery being effected up to this point in time.

2. A method according to claim 1, with which, proceeding from an initial charged condition with a maximal battery capacity, on the basis of a planned travel duration with at least one selected consumption profile, a first discharging cycle of the battery is simulated and the remaining energy reserve of the battery at the end of this first discharging cycle is predicted.

3. A method according to claim 1 or 2, with which, proceeding from the remaining energy reserve of the battery at the end of a discharging cycle, a charging cycle is simulated whilst taking into account a selected charging time and the available power of the charging means, and the available energy reserve of the battery at the end of this charging cycle is predicted.

4. A method according to claim 2 or 3, with which, proceeding from the remaining available energy reserve of the battery at the end of a charging or discharging cycle, on the basis of a further planned travel duration with a selected consumption profile, a further discharging cycle of the battery is simulated and the remaining energy reserve of the battery at the end of this further discharging cycle is predicted.

5. A method according to one of the preceding claims, with which with the prediction of the available energy reserve of the battery at a selected point in time, one also takes into account the electrical power which may be produced by an energy supply which is independent of external air as well as the fuel and reactand reserves for the energy supply which is dependent on external air

6. A method according to claim 5, with which also the remaining fuel or reactand reserves at the selected point in time are predicted.

7. A method according to one of the preceding claims, with which, for the selected point in time, on the basis of the computed remaining energy reserve of the battery, as well as where appropriate the remaining fuel- or reactand reserves of an energy supply which is independent of external air, a remaining residual travel time at a selected consumption profile is determined.

8. A method according to one of the preceding claims, with which a travel profile of the submarine is predicted in a manner such that individual journey sections with selected consumption profiles and associated charging and discharging power of the battery are simulated by calculation and are joined together into a total travel profile, wherein each journey section in each case is simulated on the basis of the remaining energy reserves at the end of the previous journey section and on the basis of the type and duration of the previously effected charging- and discharging cycles of the battery.

9. A method according to claim 8, with which boundary conditions of the journey and in particular possible points in time and the respective possible duration of the charging- and discharging cycles of the battery are inputted via an electronic marine chart (NPD) and are adopted by this as initial conditions for the computation of the travel profile in a computation unit (CPC).

10. A method according to claim 8 or 9, with which the created travel profile, preferably with the relevant values characterizing the respective travel condition, in particular with the required charging cycles of the battery, is displayed on an electronic marine chart (NPD).

11. A method according to one of the claim 8 to 10, with which the travel profile is created in a manner such that at no point in time does the battery capacity fall below a preselectable limit capacity.

12. A method according to one of the preceding claims, with which parameters of the current operating conditions, in particular the battery capacity, battery temperature, charging- and discharging power of the battery, charging and discharging times, the power consumption of all units as well as the generator power of the submarine are continuously acquired and these parameters serve as initial data for the evaluation by calculation of the remaining energy reserve of the battery at the selected future point in time.

13. A methods according to claim 12, with which previously effected computations of the energy reserve or a previously created travel profile are corrected on the basis of acquired, current operating conditions.

## Revendications

1. Procédé pour la planification de la route d'un sous-marin, qui présente au moins un moteur électrique comportant une batterie pour l'alimentation en énergie et un chargeur pour la batterie, dans lequel, pour un instant futur sélectionné, la réserve d'énergie restante disponible de la batterie est prédéterminée sur la base
de la durée de route jusqu'à cet instant,
d'au moins un profil de consommation sélectionné pour la durée de route ainsi que de la nature et de la durée des cycles de charge de la batterie ayant lieu jusqu'à cet instant.

2. Procédé selon la revendication 1, dans lequel, à partir d'un état de charge initial avec une capacité maximale de batterie on simule, sur la base d'une durée de route planifiée avec au moins un profil de consommation sélectionné, un premier cycle de décharge de la batterie et on prédétermine la réserve d'énergie restante de la batterie à la fin de ce premier cycle de décharge.

3. Procédé selon la revendication 1 ou 2, dans lequel, à partir de la réserve d'énergie restante de la batterie à la fin d'un cycle de décharge, on simule un cycle de charge en prenant en considération un temps de charge sélectionné et la puissance disponible du chargeur, et on prédétermine la réserve d'énergie disponible de la batterie à la fin de ce cycle de charge.

4. Procédé selon la revendication 2 ou 3, dans lequel, à partir de la réserve d'énergie restante disponible de la batterie à la fin d'un cycle de charge ou de décharge on simule sur la base d'une autre durée de route planifiée avec un profil de consommation sélectionné, un autre cycle de décharge de la batterie et on prédétermine la réserve d'énergie restante de la batterie à la fin de cet autre cycle de décharge.

5. Procédé selon l'une des revendications précédentes, dans lequel, lors de la prédétermination de la réserve d'énergie disponible de la batterie à un instant sélectionné, la puissance électrique pouvant être générée par une alimentation en énergie indépendante de l'air extérieur ainsi que les réserves en carburant et en réactants pour l'alimentation en énergie indépendante de l'air extérieur sont prises en considération.

6. Procédé selon la revendication 5, dans lequel les réserves restantes en carburant et en réactants sont prédéterminées à l'instant sélectionné.

7. Procédé selon l'une des revendications précédentes, dans lequel, à l'instant sélectionné on détermine, sur la base de la réserve d'énergie restante calculée de la batterie et, le cas échéant des réserves restantes en carburant et en réactants d'une alimentation en énergie indépendante de l'air extérieur, une durée de route restante pour un profil de consommation sélectionné.

8. Procédé selon l'une des revendications précédentes, dans lequel un profil de route du sous-marin est calculé d'avance de telle sorte que des tronçons individuels de route avec des profils de consommation sélectionnés et une puissance correspondante de charge et de décharge de la batterie sont simulés par calcul et regroupés pour former un profil global de route, chaque tronçon de route étant respectivement simulé sur la base des réserves d'énergie restantes à la fin du tronçon de route précédent ainsi que de la nature et de la durée des cycles de charge et de décharge de la batterie qui ont eu lieu précédemment.

9. Procédé selon la revendication 8, dans lequel les conditions marginales de route et en particulier, les instants possibles ainsi que les durées respectivement possibles des cycles de charge et de décharge de la batterie sont entrés dans une carte marine électronique (NPD) et sont repris de celle-ci dans une unité de calcul (CPC) en tant que conditions initiales pour le calcul du profil de route.

10. Procédé selon la revendication 8 ou 9, dans lequel le profil de route obtenu, de préférence avec les valeurs pertinentes caractéristiques de l'état de route en cause, en particulier avec les cycles de charge nécessaires de la batterie, est affiché dans une carte marine électronique (NPD).

11. Procédé selon l'une des revendications 8 à 10, dans lequel le profil de route est obtenu de telle sorte que la capacité de la batterie ne tombe à aucun moment au-dessous d'une capacité limite présélectionnable.

12. Procédé selon l'une des revendications précédentes, dans lequel les paramètres des états de fonctionnement actuels, en particulier la capacité de la batterie, la température de la batterie, la puissance de charge et de décharge de la batterie, les temps de charge et de décharge, la consommation de puissance de tous les groupes ainsi que la puissance du générateur du sous-marin, sont enregistrés de façon continue et servent en tant que données initiales, à déterminer, par voie de calcul, la réserve d'énergie restante de la batterie à l'instant futur sélectionné.

13. Procédé selon la revendication 12, dans lequel les calculs effectués précédemment sur la réserve d'énergie ou un profil de route obtenu précédemment sont rectifiés sur la base des états de fonctionnement actuels enregistrés.
